# EUROPÄISCHE PATENTANMELDUNG

(11) **EP 4 585 312 A1**
(43) Veröffentlichungstag der Anmeldung: **16.07.2025**
(21) Anmeldenummer: 24151571.7
(22) Anmeldetag: 12.01.2024
(51) Int. Cl.: B05B 13/02, B05B 15/60

(54) **SPRÜHVORRICHTUNG ZUM AUFTRAGEN UND VERTEILEN VON TRENNMITTEL AUF DRUCK- ODER SPRITZGUSSFORMEN**

(71) Anmelder: Christoph Böhmer Betriebsverpachtung GmbH, 57520 Steinebach (DE)
(72) Erfinder: Böhmer, Christopf, 57537 Wissen (DE)
(74) Vertreter: Paul & Albrecht Patentanwälte PartG mbB

(57) **Zusammenfassung**

Die vorliegende Erfindung betrifft eine Sprühvorrichtung (1) zum Auftragen und Verteilen von Trennmittel auf Druck- oder Spritzgussformen, mit mindestens einem Sprühkopf (2), mittels welchem das Trennmittel auf die Druck- oder Spritzgussformen auftragbar und darauf verteilbar ist, wobei der mindestens eine Sprühkopf (2) an einer Montageplatte (3) der Sprühvorrichtung (1) befestigt ist. Der Sprühkopf (2) ist mittels einer Drehverriegelung an der Montageplatte (3) fixiert.

## Beschreibung

Die vorliegende Erfindung betrifft eine Sprühvorrichtung zum Auftragen und Verteilen von Trennmittel auf Druck- oder Spritzgussformen, mit mindestens einem Sprühkopf, mittels welchem das Trennmittel auf die Druck- oder Spritzgussformen auftragbar und darauf verteilbar ist, wobei der mindestens eine Sprühkopf an einer Montageplatte der Sprühvorrichtung befestigt ist.

Derartige Sprühvorrichtungen sind allgemein bekannt. Sie weisen Sprühköpfe auf, die dazu eingesetzt werden, Druckguss- oder Spritzgussformen an ihren Wandungen mit Trennmittel zu versehen, um nach dem Gussvorgang ein leichteres Lösen des Werkstückes aus der Druckgussform zu ermöglichen. Dazu werden die Sprühköpfe auf der Montageplatte der Sprühvorrichtung verschraubt. Diese Art der Befestigung ist jedoch sehr aufwändig, so dass ein Wechsel der Sprühköpfe oder des Sprühkopfes sehr viel Zeit in Anspruch nehmen kann.

Ausgehend von diesem Stand der Technik ist es eine Aufgabe der vorliegenden Erfindung, eine Sprühvorrichtung der eingangs genannten Art bereitzustellen, die eine einfachere und flexible Montage und Demontage der Sprühköpfe ermöglicht.

Zur Lösung dieser Aufgabe wird in der vorliegenden Erfindung vorgeschlagen, den Sprühkopf mittels einer Drehverriegelung an der Montageplatte zu fixieren.

Durch die Drehvorrichtung kann der erfindungsgemäße Sprühkopf mittels einer Handbewegung von der Montageplatte entfernt werden und ein neuer Sprühkopf ebenfalls durch einen Handgriff auf der Montageplatte befestigt werden.

Eine besonders einfache Ausgestaltung einer Drehverriegelung ist das Vorsehen einer Drehverriegelung als Bajonettverschluss.

Gemäß einer Ausgestaltung der vorliegenden Erfindung ist der Drehverriegelung, insbesondere der Bajonettverschluss einer Rasteinrichtung zugeordnet, über die der Sprühkopf in einer Fixierendstellung verrastet oder verrastbar ist.

Der Sprühkopf kann an seiner der Montageplatte zugewandten Abschlussplatte Bajonettvorsprünge aufweisen, die in mindestens eine an der Montageplatte vorgesehene, insbesondere ringförmige Bajonettnut greifen, wobei der Bajonettvorsprung und die Bajonettnut korrespondierend zueinander ausgebildet sind.

Um eine genaue Positionierung des Sprühkopfes an der Montageplatte zu ermöglichen, ist in einer Ausgestaltung der vorliegenden Erfindung vorgesehen, die Bajonettvorsprünge in ihrer Erstreckung entlang der Montageplatte unterschiedlich auszubilden, so dass ein Einstecken des Sprühkopfes nur in einer einzigen Einsteckrichtung möglich ist.

Wenn der Sprühkopf einen Drehanschlag aufweist, der in Umfangsrichtung derart angeordnet ist, dass er ein Weiterdrehen des Sprühkopfes über eine Fixierendstellung hinaus blockiert, ist eine reproduzierbare Montage und Demontage gewährleistet.

Um den Sprühkopf nach Verwendung auch auf einfache Weise wieder aus der Sprühvorrichtung entfernen zu können, ist in einer Ausgestaltung der vorliegenden Erfindung vorgesehen, den Sprühkopf durch Verdrehen aus einer Fixierendstellung in eine Einsteckstellung lösbar auszuführen.

In einem weiteren Ausführungsbeispiel der vorliegenden Erfindung sind Bajonettnuten durch Winkelstücke gebildet, die auf die Montageplatte aufgeschraubt sind. Die Winkelstücke können zur Ausrichtung des Sprühkopfes, insbesondere der Düsen des Sprühkopfes einen rechten Winkel oder eine schiefe Ebene bilden, so dass durch einfaches Fixieren des Sprühkopfes an der Bajonettnut des Winkelstückes eine Ausrichtung der Düsen an die Druck- oder Spritzgussform möglich ist. Natürlich ist es auch möglich, die Winkelstück mit anderen geometrischen Formen auszuführen oder auch zwei oder mehrere verschiedenartige Winkel an der schiefen Ebene auszubilden. So können die Winkelstücke bei unterschiedlich ausgebildeten zu besprühenden Druck- oder Spritzgussformen eingesetzt und daran angepasst werden.

Natürlich ist es auch möglich, an der Montageplatte mehrere Bajonettnuten auszubilden. Hierdurch wird es möglich, mehrere Sprühköpfe an verschiedenen Positionen an der Montageplatte zu fixieren oder aber auch die Anzahl der notwendigen Sprühköpfe entsprechend der Anzahl an Bajonettnuten anzuordnen oder auch entsprechend zu variieren.

In einem weiteren Ausführungsbeispiel der vorliegenden Erfindung sind die Bajonettnuten derart an der Montageplatte fixiert bzw. fixierbar, dass der mindestens eine Sprühkopf in mindestens zwei Sprührichtungen an der Montageplatte fixierbar ist.

In einem weiteren vorteilhaften Ausführungsbeispiel der vorliegenden Erfindung ist der Sprühkopf, insbesondere der Bajonettvorsprung, über einen Sicherungsring an der Bajonettnut an der Montageplatte befestigbar. Dies verringert deutlich die Gefahr eines ungewollten Herauslösens des Sprühkopfes während des Betriebs.

Weitere vorteilhafte Merkmale der vorliegenden Erfindung werden anhand der nachfolgenden Beschreibung einer Sprühvorrichtung gemäß einer Ausführungsform der vorliegenden Erfindung unter Bezugnahme auf die beiliegende Zeichnung deutlich. Darin ist
- Fig. 1: eine schematische Teildarstellung einer erfindungsgemäßen Sprühvorrichtung mit einer Drehverriegelung im Querschnitt;
- Fig. 2: eine Explosionszeichnung einer Teilansicht der Sprühvorrichtung mit einem an der Montageplatte befestigten Sprühkopf; und
- Fig. 3: eine schematische Teildarstellung des Wirkprinzips der erfindungsgemäßen Drehverriegelung.

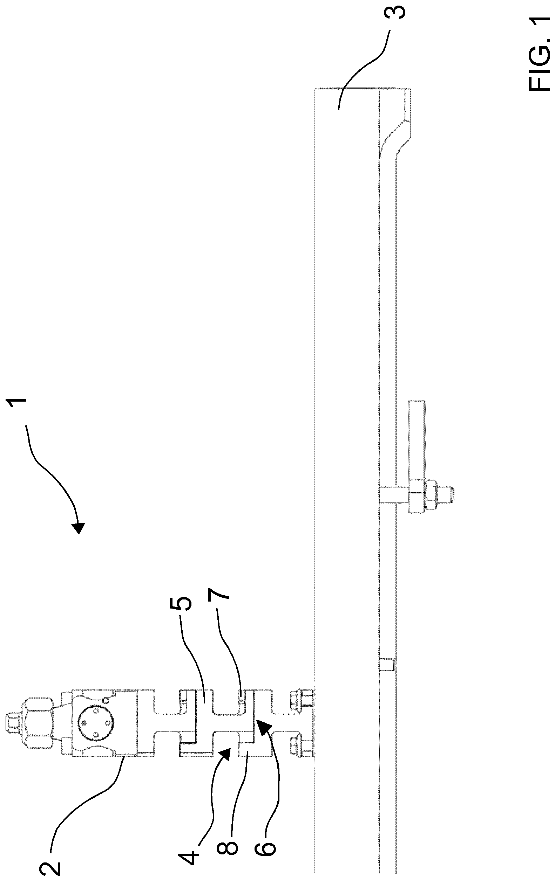

Figur 1 zeigt eine erfindungsgemäße Sprühvorrichtung 1 zum Auftragen und Verteilen von Trennmittel auf Druck- oder Spritzgussformen. Die Sprühvorrichtung 1 weist einen Sprühkopf 2 auf, mittels welchem das Trennmittel auf eine nicht dargestellte Druck- oder Spritzgussform auftragbar und darauf verteilbar ist. Der Sprühkopf 2 ist an einer Montageplatte 3 der Sprühvorrichtung 1 befestigt. Die Fixierung des Sprühkopfes 2 an der Montageplatte 3 erfolgt über einen Bajonettverschluss 4.

Zur Verriegelung des Bajonettverschlusses 4 weist der Sprühkopf 2 an seiner der Montageplatte 3 zugewandten Abschlussplatte 5 eine Bajonettnut 6 auf, die in einen mit der Montageplatte 3 verschraubten Bajonettvorsprung 7 eingreift. Dazu sind die Bajonettnut 6 und der Bajonettvorsprung 7 korrespondierend zueinander ausgebildet.

Dem Bajonettverschluss 4 ist eine Rasteinrichtung zugeordnet, über die der Sprühkopf 2 in einer Fixierendstellung verrastet ist. Um den Sprühkopf 2 in einer Fixierendstellung betreiben zu können, ist die Rasteinrichtung als Drehanschlag 8 ausgebildet, der in Umfangsrichtung derart angeordnet ist, dass er ein Weiterdrehen des Sprühkopfes 2 über die Fixierendstellung hinaus blockiert.

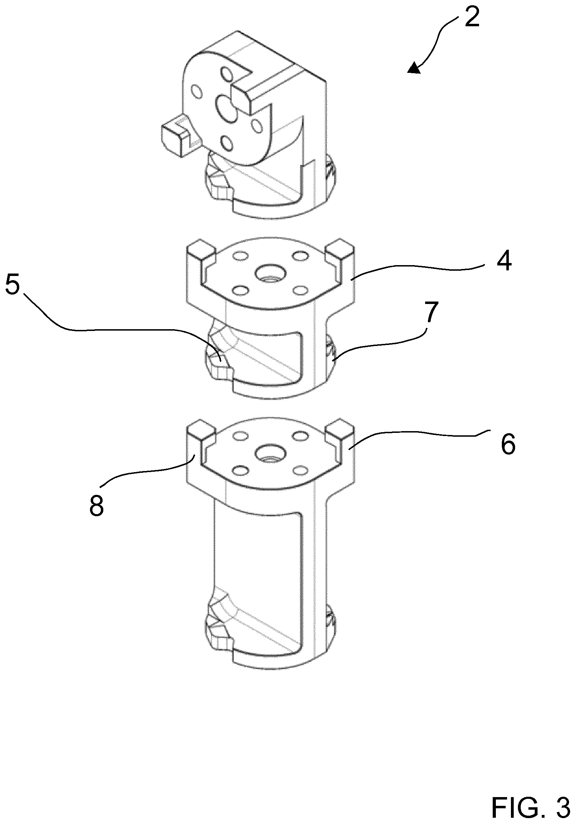

Wie insbesondere Figur 3 zu entnehmen ist, ist die Bajonettnut 6 in ihrer geometrischen Ausbildung unterschiedlich ausgebildet, so dass ein Einstecken des Sprühkopfes 2 in den Bajonettvorsprung 7 nur in einer einzigen Endstellung möglich ist.

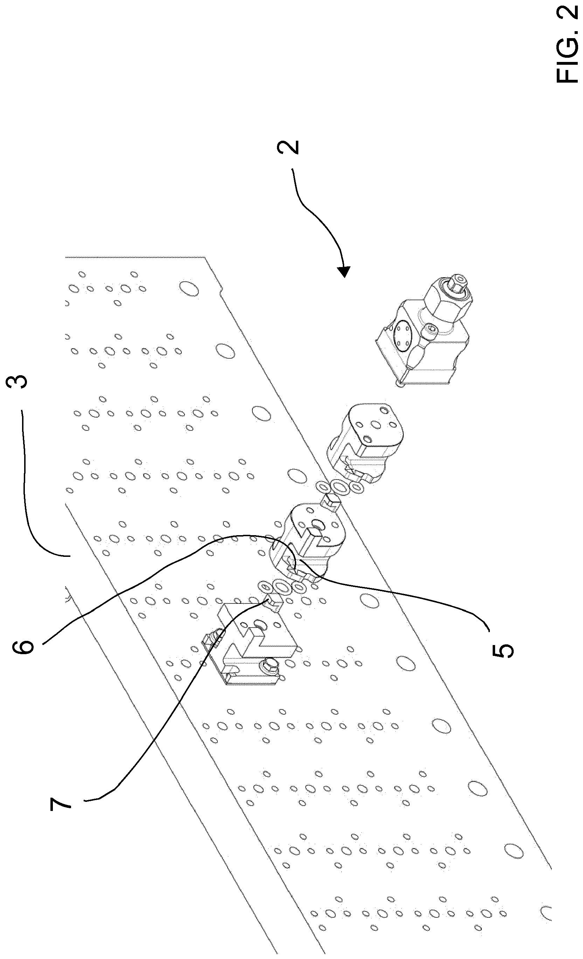

In den Figuren 1 bis 3 ist jeweils eine Sprühvorrichtung 1 mit erfindungsgemäßem Sprühkopf 2 gezeigt. In einem nicht dargestellten weiteren Ausführungsbeispiel sind an der Montageplatte 3 mehrere Bajonettvorsprünge 7 über Schrauben an der Montageplatte 3 fixiert, so dass auch mehrere Sprühköpfe 2 an der Montageplatte 3 fixiert werden können. Die Bajonettvorsprünge 7 können als Winkelstücke ausgeführt sein, was eine an die Druck- oder Spritzgussform angepasste Verteilung der Sprühköpfe 2 auf der Montageplatte 3 ermöglicht, wodurch die Sprühvorrichtung 1, insbesondere ein Sprühbild der Sprühköpfe 2 sehr gut an die Ausbildung der Druckgussform angepasst werden kann.

Um eine erfindungsgemäße Sprühvorrichtung 1 mit einem oder mehreren Sprühköpfen 2 bestücken zu können, werden die Bajonettvorsprünge 7, insbesondere die Winkelstücke an der Montageplatte 3 über Schraubverbindungen befestigt. Anschließend werden die Sprühköpfe 2 an ihrer der Montageplatte 3 zugewandten Abschlussplatte 5 mit einem korrespondierend zu dem Bajonettvorsprung 7 ausgebildeten Bajonettnut 6 versehen und auf den Bajonettvorsprung aufgesetzt und durch ein Drehen des Sprühkopfes 2 in die Fixierendstellung gebracht.

In einem weiteren nicht dargestellten Beispiel ist zur Sicherung der Position des Sprühkopfes 2 an der Montageplatte 3 ein Sicherungsring auf den Bajonettverschluss 4 vorgesehen, der ein ungewolltes Lösen des Sprühkopfes 2 während des Betriebs verhindert. Zum Austausch des Sprühkopfes 2 muss in diesem Ausführungsbeispiel zunächst der Sicherungsring vom Bajonettverschluss 4 genommen werden und im Anschluss der Sprühkopf 3 durch Verdrehen und somit Lösen der Bajonettnut 6 aus dem Bajonettvorsprung 7 aus der Sprühvorrichtung 1 entnommen werden. Alternativ ist es auch möglich, durch ein Drücken des Sprühkopfes 2 in Richtung der Montageplatte 3 ein Herausbewegen der Bajonettnut 6 aus dem Bajonettvorsprung 7 zu ermöglichen. Dazu ist an dem Bajonettvorsprung 7 ein Absatz vorgesehen, der überwunden werden muss, um den Sprühkopf 2 aus der Fixierendstellung bewegen zu können.

### Bezugszeichenliste

- 1: Sprühvorrichtung
- 2: Sprühkopf
- 3: Montageplatte
- 4: Bajonettverschluss
- 5: Abschlussplatte
- 6: Bajonettnut
- 7: Bajonettvorsprung
- 8: Drehanschlag

## Patentansprüche

1. Sprühvorrichtung (1) zum Auftragen und Verteilen von Trennmittel auf Druck- oder Spritzgussformen, mit mindestens einem Sprühkopf (2), mittels welchem das Trennmittel auf die Druck- oder Spritzgussformen auftragbar und darauf verteilbar ist, wobei der mindestens eine Sprühkopf (2) an einer Montageplatte (3) der Sprühvorrichtung (1) befestigt ist, **dadurch gekennzeichnet, dass** der Sprühkopf (2) mittels einer Drehverriegelung an der Montageplatte (3) fixiert ist.

2. Sprühvorrichtung (1) nach Anspruch 1, **dadurch gekennzeichnet, dass** die Drehverriegelung als Bajonettverschluss (4) ausgebildet.

3. Sprühvorrichtung (1) nach einem der Ansprüche 1 oder 2, **dadurch gekennzeichnet, dass** die Drehverriegelung, insbesondere der Bajonettverschluss (4) einer Rasteinrichtung zugeordnet ist, über die der Sprühkopf (2) in einer Fixierendstellung verrastet oder verrastbar ist.

4. Sprühvorrichtung (1) nach einem der vorhergehenden Ansprüche, **dadurch gekennzeichnet, dass** der Sprühkopf (2) an seiner der Montageplatte (3) zugewandten Abschlussplatte mindestens einen Bajonettvorsprung (7) aufweist, der in mindestens eine an der Montageplatte (3) vorgesehene insbesondere ringförmige Bajonettnut (6) greift, wobei der Bajonettvorsprung (7) und die Bajonettnut (6) korrespondierend zueinander ausgebildet sind.

5. Fixiereinrichtung nach Anspruch 4, **dadurch gekennzeichnet, dass** der Bajonettvorsprung (7) in seiner Erstreckung entlang der Montageplatte (3) unterschiedlich ausgebildet ist, so dass ein Einstecken des Sprühkopfes (2) nur in einer einzigen Einsteckstellung möglich ist.

6. Sprühvorrichtung (1) nach einem der vorherigen Ansprüche, **dadurch gekennzeichnet, dass** der Sprühkopf (2) einen Drehanschlag (8) aufweist, der in Umfangsrichtung derart angeordnet ist, dass er ein Weiterdrehen des Sprühkopfes (2) über eine Fixierendstellung hinaus blockiert.

7. Sprühvorrichtung (1) nach einem der vorherigen Ansprüche, **dadurch gekennzeichnet, dass** der Sprühkopf (2) durch Verdrehen aus einer Fixierendstellung in eine Einsteckstellung lösbar ist.

8. Sprühvorrichtung (1) nach einem der vorhergehenden Ansprüche, **dadurch gekennzeichnet, dass** an der Montageplatte (3) mehrere Bajonettnuten (6) ausgebildet sind.

9. Sprühvorrichtung (1) nach Anspruch 8, **dadurch gekennzeichnet, dass** die Bajonettnuten (6) derart an der Montageplatte (3) fixiert bzw. fixierbar sind, dass der Sprühkopf (2) in mindestens zwei Sprüheinrichtungen an der Montageplatte (3) fixierbar ist.
